# EUROPÄISCHE PATENTSCHRIFT

(11) **EP 3 884 262 B1**
(45) Veröffentlichungstag und Bekanntmachung des Hinweises auf die Patenterteilung: **14.06.2023**
(21) Anmeldenummer: 19787233.6
(22) Anmeldetag: 14.10.2019
(51) Int. Cl.: G01N 15/02, G01N 15/14, G01N 21/71, G01N 15/00, G01N 15/06, G01N 15/10

(54) **VERFAHREN ZUM BETREIBEN EINES PARTIKELSENSORS**
METHOD FOR OPERATING A PARTICLE SENSOR
PROCÉDÉ POUR FAIRE FONCTIONNER UN CAPTEUR DE PARTICULES

(30) Priorität: 20.11.2018 DE 102018219891
(43) Veröffentlichungstag der Anmeldung: 29.09.2021
(73) Patentinhaber: Robert Bosch GmbH, 70442 Stuttgart (DE)
(72) Erfinder: RUSANOV, Radoslav, 70499 Stuttgart (DE); WICHMANN, Matthias, 71116 Gaertringen (DE)
(86) Internationale Anmeldenummer: PCT/EP2019/077705
(87) Internationale Veröffentlichungsnummer: WO 2020/104111

(56) Entgegenhaltungen:
- US-A1- 2012 154 348
- US-A1- 2017 315 122

## Beschreibung

### Stand der Technik

Die vorliegende Erfindung betrifft ein Verfahren zum Betreiben eines Partikelsensors.

Der bei dem Verfahren verwendete Partikelsensor weist ein einen Laser aufweisendes Lasermodul und einen zur Detektion von Temperaturstrahlung eingerichteten Detektor, ein im Strahlengang des Lasers des Lasermoduls angeordnetes optisches Element und einen Detektor auf. Das optische Element ist dazu eingerichtet, von dem Lasermodul ausgehendes Laserlicht in einen Spot zu bündeln. Der Detektor des Partikelsensors ist so angeordnet, dass er vom Spot ausgehende Strahlung detektiert.

Mit modernen Dieselmotoren angetriebene Kraftfahrzeuge sind mit Partikelfiltern ausgerüstet. Die Funktionsfähigkeit dieser Partikelfilter muss gesetzlichen Vorschriften entsprechend mit On-Board Diagnose-Mitteln überwacht werden. Für Kraftfahrzeuge werden dabei zum Beispiel einen elektrischen Widerstand aufweisende Sensoren verwendet, die von der Anmelderin hergestellt und vertrieben werden. Die Funktionsweise dieser bekannten Sensoren basiert auf der Bildung von leitfähigen Rußpfaden zwischen zwei Interdigital-Elektroden. Bei diesen Sensoren ist die Anstiegszeit des Stromes nach Anlegen einer Spannung ein Maß für die Rußkonzentration. Dabei wird die Massenkonzentration (mg/m³ Abgas bzw. mg/km Fahrstrecke) gemessen. Die Berechnung der Anzahlkonzentration (Zahl der Partikel pro m³ Abgas bzw. pro km Fahrstrecke) ist bei diesem Sensorkonzept aus vielfältigen Gründen nur sehr schwer möglich oder sogar unmöglich. Der bekannte Sensor wird periodisch regeneriert, indem er durch ein integriertes Heizelement auf mindestens 700°C aufgeheizt wird, wodurch die Rußablagerungen wegbrennen.

In der wissenschaftlichen Szene, welche sich mit dem Einfluss der feinen Partikel auf die Gesundheit beschäftigt, gibt es seit langem Diskussionen darüber, welche der Größen Partikel-Gesamtmasse (in mg/m³ oder in mg/km angegeben) oder Anzahl n der Partikel (n/m³ oder n/km) in Bezug auf Beeinträchtigungen der Gesundheit die kritischere Größe ist. Dabei ist zu beachten, dass gerade die kleinen Rußpartikel, welche aufgrund ihrer sehr kleinen Masse (m~r³) einen nur geringen Anteil an der Gesamtmasse haben, besonders gefährlich sind. Dies liegt an ihrer hohen "Eindringtiefe" in den menschlichen Körper, die sich aus ihrer geringen Größe ergibt. Es ist daher absehbar, dass die Gesetzgebung On Board Diagnose Mittel zur messtechnischen Erfassung auch der Partikelanzahl vorschreiben wird, sobald entsprechende (von der Performance und dem Preis her akzeptable) Lösungen auf dem Markt verfügbar sind.

Das Prinzip der Laser Induzierten Inkandeszenz (LII) ist zur Detektion von Nanopartikeln (in Luft) bereits seit längerem bekannt und wird z.B. auch für die Charakterisierung des Verbrennungsprozesses in "gläsernen" Motoren im Labor oder für die Abgas-Charakterisierung in Laborumgebungen intensiv angewandt. Dabei werden die Rußpartikel mit einem Nanosekunden-Puls eines Hochleistungslasers auf mehrere Tausend Grad Celsius erhitzt, so dass sie signifikant Temperaturstrahlung emittieren. Diese thermisch induzierte Lichtemission der Rußpartikel wird mit einem Lichtdetektor gemessen. Die Methode erlaubt die Detektion von sehr kleinen Rußpartikeln mit einem Durchmesser bis hinunter zu einer Größe von wenigen 10 nm.

Dabei ist der Einsatz von gepulsten Lasern zur gleichzeitigen Detektion vieler Partikel als auch von CW-Lasern (continuous wave) zur Detektion von einzelnen Partikeln bekannt. In diesem Zusammenhang zeigt US 2003/197863 A eine Verwendung einer Erhitzung eines Ensembles von Partikeln durch einen Nanosekunden-Hochleistungslaser, welcher eine sehr hohe Lichtintensität für eine kurze Zeit (ns) erreicht. Der Betrieb erfolgt im kollimierten (parallel ausgerichteten) Teil des Strahls mit einem Querschnitt von einigen Quadratzentimetern bzw. -millimetern. Somit werden mit einem einzigen Laserpuls tausende von Rußpartikeln gleichzeitig aufgeheizt, was eine Zählung von einzelnen Partikeln nicht erlaubt. Außerdem wird hier ein nicht miniaturisierbarer und kostenintensiver Laser verwendet.

Bei US 2001/0767104 wird die gleiche Funktionsweise verwendet, wie bei der US 2003/197863 A, jedoch mit dem Unterschied, dass die letztere Schrift ein geschlossenes Gerät betrifft, das einen Eingang für das die Partikel transportierende Abgas besitzt. Die Messung der Partikel findet innerhalb des Gerätes statt.

Die US 2012/154348 A1 und die US 2017/315122 A1 offenbaren Verfahren zum Betreiben eines Partikelsensors.

### Offenbarung der Erfindung

Das erfindungsgemäße Verfahren unterscheidet sich von diesem Stand der Technik dadurch, dass die Ausgangssignale des Detektors einer Filterung unterzogen werden, mit der von nicht ausreichend aufgeheizten Partikeln erzeugte Ausgangssignale von einer weiteren Auswertung ausgeschlossen werden. Das erfindungsgemäße Steuergerät unterscheidet sich von diesem Stand der Technik dadurch, dass es dazu eingerichtet diese Verfahrensschritte auszuführen.

Der bei dem erfindungsgemäßen Verfahren verwendete Partikelsensor arbeitet mit einem fokussierten Laser-Strahl mit sehr hoher Intensität, um die durch den Laserspot hindurch fliegenden Rußpartikel auf mehrere tausend Grad zu erhitzen. Als Messsignal wird das thermisch emittierte Licht der aufgeheizten Partikel verwendet. In der hier vorgestellten Erfindung wird ein kontinuierlich arbeitender (CW-) Laser verwendet, dessen Strahlung über entsprechende optische Elemente (z.B. Linsen) auf einen sehr kleinen Spot fokussiert wird. Als Laserquelle können kostengünstige Halbleiter Laserdioden eingesetzt werden, was die Kosten für den Partikelsensor stark senkt. Die Detektion des LII-Lichtes kann z.B. mittels einer empfindlichen Fotodiode oder eines Multi-Pixel-Photon-Counters (MPPC) erfolgen.

Das erfindungsgemäße Verfahren erlaubt sowohl eine Messung der Anzahl- als auch der Massenkonzentration von Partikeln in einem Fluid. Bei dem Fluid kann es sich um ein Gas oder eine Flüssigkeit handeln. Die Partikel sind zum Beispiel Flüssigkeitströpfchen in einem Aerosol oder Rußpartikel im Abgas von Diesel- oder Benzinfahrzeugen. Das erfindungsgemäße Verfahren ermöglicht eine Einzelpartikeldetektion in einem Prüfvolumen, so dass auch die Partikelgröße aus den Messdaten bestimmt werden kann.

Die Erfindung erlaubt insbesondere eine On Board Diagnose des Zustandes von Partikelfiltern im Abgassystem von Verbrennungsmotoren. Dazu ist der Sensor im Abgasstrom stromabwärts von dem Partikelfilter angeordnet. Der mit dem erfindungsgemäßen Verfahren betriebene Partikelsensor besitzt eine vorteilhaft kurze Ansprechzeit und ist sofort nach seiner durch das Einschalten des Lasers erfolgenden Aktivierung einsatzbereit. Gerade in Benzinfahrzeugen ist die bei dem erfindungsgemäßen Verfahren mögliche Partikelzahl-Messfähigkeit sowie die sofortige Einsatzbereitschaft des Sensors unmittelbar nach dem Start des Fahrzeugs sehr wichtig, da ein Großteil der bei Benzinmotoren typischerweise sehr feinen Partikel (wenig Masse, hohe Anzahl) während des Kaltstarts entsteht.

Die erfindungsgemäße Filterung erlaubt eine Unterscheidung von Partikeln die durch den Laserspot geflogen sind von solchen Partikeln, die in einem vergleichsweise kleineren Abstand am Laserspot vorbeigeflogen sind und eine Unterscheidung der letztgenannten Partikel von solchen Partikeln, die in einem vergleichsweise größeren Abstand am Laserspot vorbeigeflogen sind, aus dem detektierten Signal. Die zuletzt genannten Partikel werden nicht ausgewertet und damit ausgefiltert.

Damit wird sichergestellt, dass alle ausgewerteten Partikel eine annähernd gleiche Temperatur erreicht haben (Sättigungstemperatur -3500K). Nur in diesem Fall annähernd gleicher Temperatur hängt die Signalintensität direkt von der Partikelgröße ab. In der Umkehrung erlaubt dies eine Bestimmung der Partikelgröße aus der Signalintensität.

Außerdem sorgt eine solche Filterung für eine klar definierte Größe des Detektionsvolumens bzw. -querschnitts, wodurch eine genaue Volumenkonzentration der Partikel aus den gemessenen Daten extrahierbar wird. Die hohe Genauigkeit der Bestimmung des Detektionsvolumens erlaubt eine genaue Konzentrationsbestimmung (Partikel/m³ oder Partikel/km). Die hohe Genauigkeit der Größenbestimmung erlaubt eine genaue Bestimmung der Partikelmasse (mg/m³ bzw. mg/km).

Das erfindungsgemäße Verfahren kann nicht nur zur Bestimmung von Partikelmassen und Partikelkonzentrationen im Abgas von Verbrennungsmotoren, sondern auch für andere Szenarios und Einsatzbereiche verwendet werden, zum Beispiel für Portable Emission Monitoring Systeme, Messungen von Raumluftqualität, und Messungen von Emissionen von Verbrennungsanlagen (privat, industriell), ohne dass diese Aufzählung Anspruch auf Vollzähligkeit erhebt.

Die Erfindung zeichnet sich dadurch aus, dass die Filterung so erfolgt, dass Peaks, die eine charakteristische Doppelpeak-Struktur aufweisen, von der weiteren Auswertung ausgeschlossen werden, dass eine Erkennung der charakteristischen Doppelpeak-Struktur mittels eines Signalverarbeitungsverfahrens erfolgt, dass das Signalverarbeitungsverfahren mit einer Mustererkennung mittels künstlicher Intelligenz oder einem Fitten einer Kurve der Doppelpeak-Struktur an eine Muster-Kurvenform oder durch Algorithmen zur Findung von Hochpunkten der Doppelpeak-Struktur und zur Auswertung eines zeitlichen Abstandes der Hochpunkte erfolgt, dass die Filterung auf einer Auswertung des zeitlichen Abstandes von Peaks im Ausgangssignal des Detektors basiert und dass ein erster Peak im Ausgangssignal des Detektors erfasst wird und eine Entscheidung darüber, ob der erfasste erste Peak als ein ein Partikel anzeigendes Ereignis gezählt wird, davon abhängig ist, ob innerhalb einer vorgegebenen ersten Zeitdauer t1, die mit dem Erfassen des ersten Peaks beginnt, ein weiterer Peak im Ausgangssignal des Detektors erfasst wird.

Weiter ist bevorzugt, dass die erste Zeitdauer t1 in Abhängigkeit von einer Geschwindigkeit des Fluids vorgegeben wird, das die Partikel transportiert.

Eine weitere bevorzugte Ausgestaltung zeichnet sich dadurch aus, dass eine Zeitspanne erfasst wird, die seit dem Erfassen des ersten Peaks verstrichen ist, dass der erste Peak als ein Partikel gezählt wird, wenn innerhalb der vorgegebenen ersten Zeitdauer kein weiterer Peak im Ausgangssignal des Detektors erfasst wird.

Bevorzugt ist auch, dass dann, wenn ein zweiter Peak innerhalb der ersten Zeitdauer t1 erfasst worden ist, überprüft wird, ob der zweite Peak innerhalb einer Zeitdauer t2 erfasst worden ist, die kürzer als die erste Zeitdauer t1 ist und dass dann, wenn der zweite Peak innerhalb der zweiten Zeitdauer erfasst worden ist, der erste Peak und der zweite Peak eines Doppel-Peaks zusammen als ein Partikel gezählt werden.

Weiter ist bevorzugt, dass die Höhe eines Peaks als Maß für die Größe des Partikels gewertet wird.

Eine weitere bevorzugte Ausgestaltung zeichnet sich dadurch aus, dass eine Höhe des ersten Peaks des Doppelpeaks als Maß für die Größe gewertet wird.

Bevorzugt ist auch, dass vom Spot ausgehende Strahlung einer Wellenlängenfilterung unterzogen wird, bei der im Wellenlängenbereich der Laserstrahlung liegende Wellenlängen ausgeschlossen werden.

Mit Blick auf Ausgestaltungen des Steuergerätes ist bevorzugt, dass dieses dazu eingerichtet, insbesondere dazu programmiert ist, ein Verfahren nach einem der oben genannten Ausgestaltungen des Verfahrens auszuführen.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Dabei bezeichnen gleiche Bezugszeichen in verschiedenen Figuren jeweils gleiche oder zumindest ihrer Funktion nach vergleichbare Elemente. Es zeigen, jeweils in schematischer Form:
- Fig. 1: ein auf der Laser Induzierten Inkandeszenz basierendes Messprinzip, das bei der Erfindung verwendet wird;
- Fig. 2: einen prinzipiellen Aufbau eines erfindungsgemäßen Rußpartikelsensors;
- Fig. 3: ein Ausführungsbeispiel eines erfindungsgemäßen Rußpartikelsensors;
- Fig. 4: schematisch eine simulierte Intensitätsverteilung um den Laserspot und die Trajektorie eines Partikels, das am Laserspot vorbei fliegt;
- Fig. 5: ein Lll-Signal (Intensität der von einem Partikel ausgehenden Temperaturstrahlung) für ein seitlich am Zentrum des Laserspots vorbeifliegendes Partikel über der Zeit;
- Fig. 6: ein Flussdiagramm als Ausführungsbeispiel eines erfindungsgemäßen Verfahrens; und
- Figur 7: ein Lll-Signal für ein durch das Zentrum des Laserspots hindurch fliegendes Partikel über der Zeit.

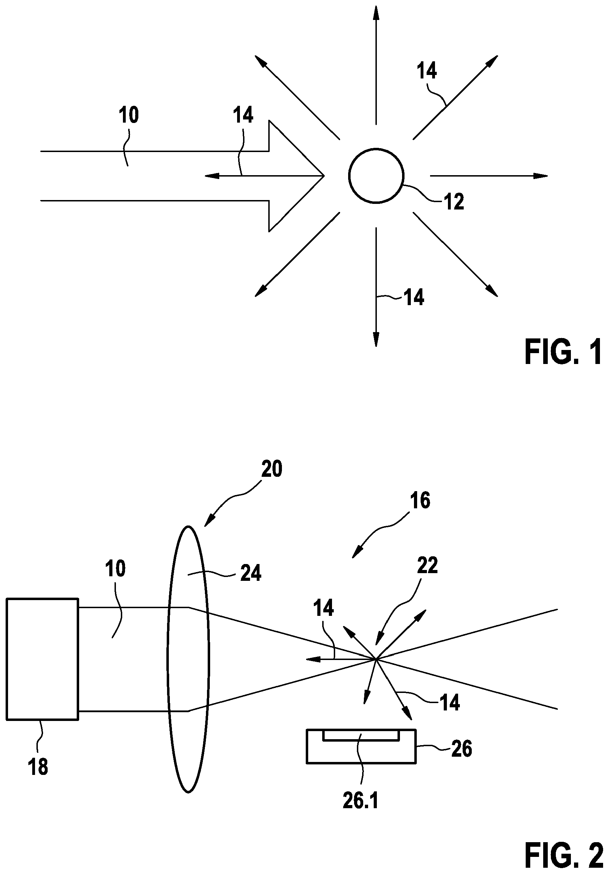

Figur 1 veranschaulicht das auf der Laser Induzierten Inkandeszenz (LII) basierende Messprinzip. Laserlicht 10 hoher Intensität trifft auf ein Rußpartikel 12. Die Intensität des Laserlichts 10 ist so hoch, dass die vom Rußpartikel 12 absorbierte Energie des Laserlichtes 10 das Rußpartikel 12 auf mehrere Tausend Grad Celsius erhitzt. Als Folge der Erhitzung emittiert das Rußpartikel 12 spontan und im Wesentlichen ohne Vorzugsrichtung signifikant Strahlung 14 in Form von Temperaturstrahlung, im Folgenden auch als LII-Licht bezeichnet. Ein Teil der in Form von Temperaturstrahlung emittierten Strahlung 14 wird daher auch entgegengesetzt zur Richtung des einfallenden Laserlichtes 10 emittiert.

Figur 2 zeigt schematisch einen prinzipiellen Aufbau eines Ausführungsbeispiels eines erfindungsgemäßen Rußpartikelsensors 16. Der Rußpartikelsensor 16 weist hier ein CW-Lasermodul 18 (CW: continuous wave; Dauerstrich) auf, dessen bevorzugt paralleles Laserlicht 10 mit wenigstens einem im Strahlengang des CW-Lasermoduls 18 angeordneten optischen Element 20 auf einen sehr kleinen Spot 22 fokussiert wird. Das CW-Lasermodul 18 wird bevorzugt mit kleineren Leistungen, insbesondre mit Leistungen zwischen 50 mW und 500 mW, teilweise auch bis zu 5000mW, betrieben. Das optische Element 20 ist bevorzugt eine erste Linse 24. Nur im Volumen des Spots 22 erreicht die Intensität des Laserlichts 10 die für LII notwendigen hohen Werte.

Die Abmessungen des Spots 22 liegen im Bereich einiger Mikrometer, insbesondere im Bereich von zum Beispiel zehn Mikrometern. Bei einer angenommenen Partikelkonzentration von 10¹³ pro m³ kann dann bei typischen Abgasgeschwindigkeiten von Verbrennungsmotoren davon ausgegangen werden, dass zu einem gegebenen Zeitpunkt immer nur ein Partikel durch den Spot 22 fliegt und zur Emission auswertbarer Strahlungsleistungen angeregt wird, sei es durch laserinduzierte Inkandeszenz oder durch chemische Reaktionen (insbesondere Oxidation). Als Folge kann davon ausgegangen werden, dass sich stets höchstens ein Rußpartikel 12 in dem Spot 22 befindet und dass ein momentanes Messsignal des Rußpartikelsensors 16 nur von diesem höchstens einen Rußpartikel 12 stammt. Das Messsignal wird von einem Detektor 26 erzeugt, der im Rußpartikelsensor 16 so angeordnet ist, dass er vom den Spot 22 durchfliegenden Rußpartikel 12 ausgehende Strahlung 14, insbesondere Temperaturstrahlung detektiert. Der Detektor 26 weist dazu bevorzugt wenigstens eine Fotodiode 26.1 auf. Damit wird eine Einzelpartikelmessung möglich, welche die Extraktion von Informationen über das Rußpartikel 12 wie Größe und Geschwindigkeit ermöglicht.

Damit lässt sich die Abgasgeschwindigkeit bestimmen, und die Berechnung eines Partikelgrößenspektrums wird möglich. Die erste Größe ist für die Berechnung der Anzahlkonzentration der Rußpartikel 12 wichtig. In Kombination mit der zweiten Größe kann auch die Massenkonzentration berechnet werden. Dies stellt einen klaren Vorteil gegenüber anderen Messmethoden für die Rußpartikelmessung dar.

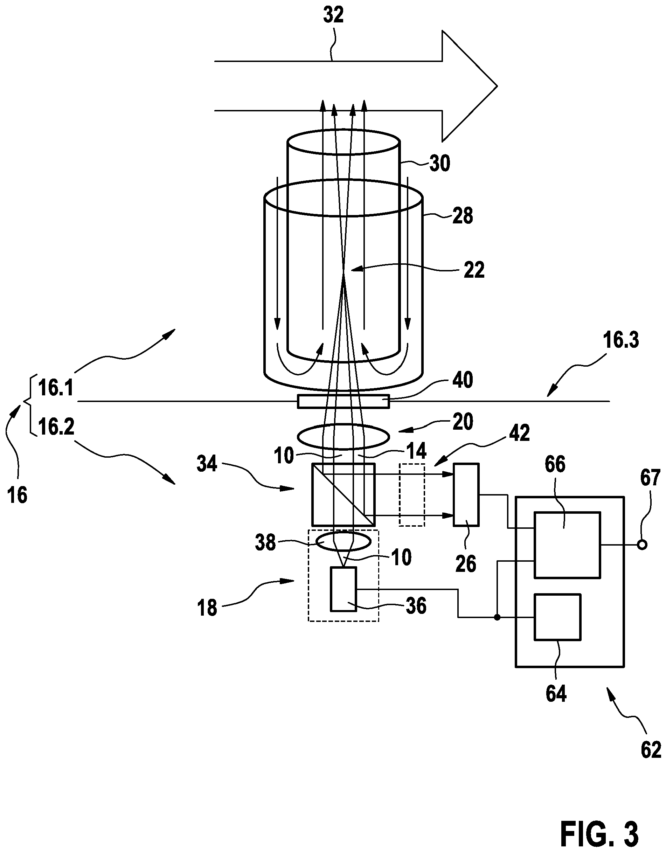

Figur 3 zeigt ein vorteilhaftes Ausführungsbeispiel eines erfindungsgemäßen Rußpartikelsensors 16, der sich für den Einsatz als Rußpartikelsensor im Abgas eines Verbrennungsprozesses eignet.

Der Rußpartikelsensor 16 weist eine Anordnung aus einem äußeren Schutzrohr 28 und einem inneren Schutzrohr 30 auf. Die beiden Schutzrohre 28, 30 haben bevorzugt eine allgemeine Zylinderform oder Prismenform. Die Grundflächen der Zylinderformen sind bevorzugt kreisförmig, elliptisch oder vieleckig. Die Zylinder sind bevorzugt koaxial angeordnet, wobei die Achsen der Zylinder quer zur Strömung von Abgas 32 ausgerichtet sind. Das innere Schutzrohr 30 ragt in Richtung der Achsen über das äußere Schutzrohr 28 hinaus in das strömende Abgas 32 hinein. An dem dem strömenden Abgas abgewandten Ende der beiden Schutzrohre 28, 30 ragt das äußere Schutzrohr 28 über das innere Schutzrohr 30 hinaus. Die lichte Weite des äußeren Schutzrohrs 28 ist bevorzugt so viel größer als der äußere Durchmesser des inneren Schutzrohrs 30, dass sich zwischen den beiden Schutzrohren 28, 30 ein erster Strömungsquerschnitt ergibt. Die lichte Weite des inneren Schutzrohrs 30 bildet einen zweiten Strömungsquerschnitt.

Diese Geometrie hat zur Folge, dass Abgas 32 über den ersten Strömungsquerschnitt in die Anordnung der beiden Schutzrohre 28, 30 eintritt, dann an dem dem Abgas 32 abgewandten Ende der Schutzrohre 28, 30 seine Richtung ändert, in das innere Schutzrohr 30 eintritt und aus diesem vom vorbeiströmenden Abgas 32 herausgesaugt wird. Dabei ergibt sich im inneren Schutzrohr 30 eine laminare Strömung. Diese Anordnung von Schutzrohren 28, 30 wird mit dem Rußpartikelsensor 16 quer zur Abgasströmung an, bzw. in einem Abgasrohr befestigt.

Der Rußpartikelsensor 16 weist darüber hinaus das Lasermodul 18 auf, das bevorzugt paralleles Laserlicht 10 erzeugt. Im Strahlengang des bevorzugt parallelen Laserlichtes 10 befindet sich ein Strahlteiler 34. Ein den Strahlteiler 34 ohne Umlenkung durchlaufender Teil des Laserlichtes 10 wird durch das optische Element 20 zu einem sehr kleinen Spot 22 im Inneren des inneren Schutzrohrs 30 fokussiert. In diesem Spot 22 ist die Lichtintensität hoch genug, um die mit dem Abgas 32 transportierten Rußpartikel 12 auf mehrere Tausend Grad Celsius zu erhitzen, so dass die erhitzten Rußpartikel 12 signifikant Strahlung 14 in Form von Temperaturstrahlung emittieren. Die Strahlung 14 liegt zum Beispiel im nah-infraroten und sichtbaren Spektralbereich mit einem Maximum im roten Bereich (bei ca. 750nm), ohne dass die Erfindung auf Strahlung 14 aus diesem Spektralbereich beschränkt ist. Ein Teil dieser ungerichtet in Form von Temperaturstrahlung emittierten Strahlung 14, beziehungsweise dieses LII-Lichtes, wird von dem optischen Element 20 erfasst und über den Strahlteiler 34 auf den Detektor 26 gerichtet. Dieser Aufbau hat den besonders wichtigen Vorteil, dass nur ein optischer Zugang zum Abgas 32 benötigt wird, da die gleiche Optik, insbesondere das gleiche optische Element 20 für die Erzeugung des Spots 22 und für das Erfassen der vom Rußpartikel 12 ausgehenden Strahlung 14 benutzt wird. Das Abgas 32 ist ein Beispiel eines Messgases. Das Messgas kann auch ein anderes Gas oder Gasgemisch sein, zum Beispiel Raumluft, oder eine Flüssigkeit.

Beim Gegenstand der Figur 3 weist das Lasermodul 18 eine Laserdiode 36 und eine zweite Linse 38 auf, die das von der Laserdiode 36 ausgehende Laserlicht 10 bevorzugt parallel ausrichtet. Der Einsatz der Laserdiode 36 stellt eine besonders kostengünstige und einfach handhabbare Möglichkeit der Erzeugung von Laserlicht 10 dar. Das bevorzugt parallele Laserlicht 10 wird durch das optische Element 20 zum Spot 22 fokussiert.

Der optische Rußpartikelsensor 16 weist bevorzugt einen dem Abgas ausgesetzten ersten Teil 16.1 und einen dem Abgas nicht ausgesetzten zweiten Teil 16.2 auf, der die optischen Komponenten des Rußpartikelsensors 16 enthält. Beide Teile sind durch eine Trennwand 16.3 getrennt, die zwischen den Schutzrohren 28, 30 und den optischen Elementen des Rußpartikelsensors verläuft. Die Wand 16.3 dient der Isolation der empfindlichen optischen Elemente von dem heißen, chemisch aggressiven und "schmutzigen" Abgas 32. In der Trennwand 32 ist im Strahlengang des Laserlichtes 10 ein Schutzfenster 40 angebracht, durch das hindurch das Laserlicht 10 in das Abgas 32 einfällt und über das vom Spot 22 ausgehende Strahlung 14 auf das optische Element 20 und von da aus über den Strahlteiler 34 auf den Detektor 26 einfallen kann.

Alternativ zu dem hier dargestellten Ausführungsbeispiel kann die Erzeugung des Spots 22 und das Erfassen der von Rußpartikeln im Spot ausgehenden Strahlung 14 auch über getrennte optische Strahlengänge erfolgen.

Es wäre prinzipiell denkbar, dass das Laserlicht von der Lichtquelle bis zur Fokussierlinse mit Hilfe von einem Lichtwellenleiter und entsprechenden ein- und auskoppelnden optischen Elementen geleitet wird. Das Gleiche gilt auch für das zu detektierende LII-Licht, das von im Spot aufgeheizten Partikeln ausgeht. Es ist auch nicht zwingend erforderlich, dass das Laserlicht und das LII-Licht über die gleiche Linse entsprechend fokussiert und eingesammelt werden. Im Prinzip ist die Erfindung auf einen beliebigen LII-Sensor anwendbar, solange die Partikel über einen fokussierten CW-Laser erhitzt werden und die Abgasstromführung und der Laserstrahl zumindest teilweise parallel verlaufen.

Es ist auch denkbar, den Spot 22 mit anderen als den hier lediglich als Ausführungsbeispiel angegebenen Linsenkombinationen zu erzeugen. Außerdem kann der Rußpartikelsensor 16 auch mit anderen Laserlichtquellen als den hier für Ausführungsbeispiele angegebenen Laserdioden 36 verwirklicht werden.

Figur 3 zeigt auch ein optionales zusätzliches Filter 42, das im Strahlengang zwischen dem Strahlteiler 34 und dem Detektor 26 angeordnet ist. Das Filter 42 zeichnet sich dadurch aus, dass es für das Laserlicht 10 weniger durchlässig ist als für die Strahlung 14, die vom Spot 22 ausgeht, wenn sich dort ein Rußpartikel 12 befindet.

Dieses Ausführungsbeispiel verbessert das Signal-to-Noise-Ratio des auf den Detektor 26 fallenden Lichtes deutlich, weil es die Menge an Laserlicht 10, das aufgrund von Rückreflexionen des Laserlichtes 10 an den optischen Komponenten des Rußpartikelsensors 16 auf den Detektor 26 fallen würde, stark reduziert. Solches Laserlicht würde störendes zusätzliches Schrotrauschen erzeugen, das eine Detektion der z.B. in Form von Temperaturstrahlung von Rußpartikeln im Spot 22 ausgehenden Strahlung 14 erschweren würde. Durch das Filter 42 wird der störende Rauschuntergrund für die von Rußpartikeln 12 z.B. in Form von Temperaturstrahlung emittierten Impulse von Strahlung 14 reduziert. Das den Filter 42 aufweisende Ausführungsbeispiel nutzt spezifisch die schmale Bandbreite von Laserquellen (z.B. Laserdioden) aus, indem genau diese schmale Bandbreite vor dem Lichtdetektor 26 ausgefiltert wird. Denkbar ist auch die Verwendung eines einfachen Kantenfilters. Das Signal-to-Noise-Ratio verbessert sich dadurch sehr stark.

Bei einem Einbau des Rußpartikelsensors 16 in einen Abgasstrang eines Verbrennungsprozesses erlaubt die mit dem Filter 42 erfolgende Ausfilterung des Anregungslichts (Laserlichtes) in Verbindung mit der fast kompletten Abwesenheit von Fremd-/Umgebungslicht im Abgasstrang die Verwendung von besonders empfindlichen Detektoren 26, z.B. von kostengünstigen SiPM (silicon photomultiplier) oder SPAD-Dioden (single-photon avalanche diode). Als Folge kann bereits ein von einem besonders kleinen Rußpartikel erzeugtes und daher extrem kleines Lichtsignal, das beispielsweise von wenigen 10 Photonen gebildet wird, detektiert werden. Damit sinken die Abmessungen von Rußpartikeln, die gerade noch nachweisbar sind, auf eine untere Nachweisgrenze von 10 bis 100 nm ab.

Die Steuer- und Auswerteelektronik 62 kann ein separates Steuergerät sein, oder sie kann in ein Steuergerät integriert sein, das zur Steuerung des Verbrennungsprozesses dient. Die Steuer- und Auswerteelektronik 62 weist ein Steuermodul 64 auf, das die Intensität des vom Lasermodul 18 ausgehenden Laserlichtes 10 steuert. Das Signal des Detektors 26 wird im Steuergerät erfindungsgemäß, das heißt mit dem erfindungsgemäßen Verfahren oder einer seiner Ausgestaltungen, durch eine Auswerteschaltung 66 verarbeitet, die dazu zum Beispiel einen Mikroprozessor und einen Speicher aufweist, in dem Anweisungen zur Durchführung eines erfindungsgemäßen Verfahrens gespeichert sind. Ergebnisse der Verarbeitung werden zum Beispiel an einem Ausgang 67 der Auswerteschaltung 66 oder der Steuer- und Auswerteelektronik 62 bereitgestellt,
Ein generelles Problem eines solchen und jeden anderen Lll-basierten Partikelsensors besteht darin, dass ein kleines Partikel in der Mitte des Laserspots unter Umständen das gleiche Signal erzeugt, wie ein größeres Partikel am Rande des Spots. Damit ist die Größenbestimmung für die Partikel aus den gemessenen Signalamplituden nicht mehr möglich. Diese Erfindung bietet eine Lösung für dieses Problem für einen LII-Sensor mit zumindest teilweiser parallelen Abgasstromführung zum Laserstrahl.

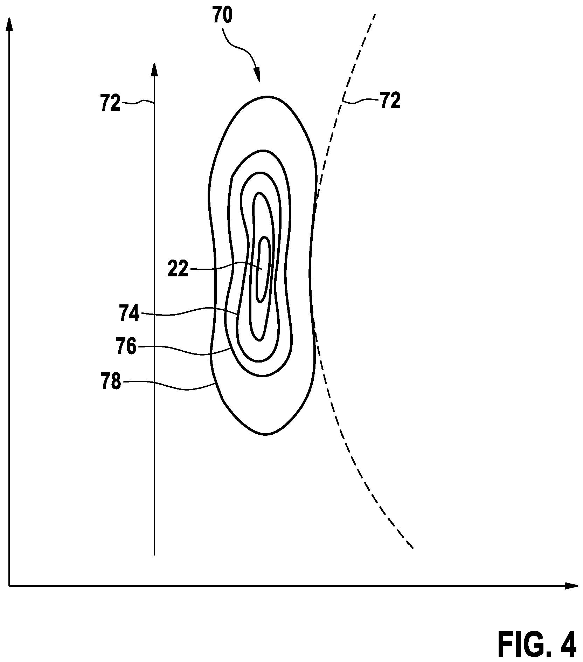

Die Figur 4 zeigt schematisch eine simulierte Intensitätsverteilung 70 um den Laserspot entlang der Ausbreitungsrichtung des Strahls und die Trajektorie 72 eines Partikels, das am Laserspot 22 vorbei fliegt. Die geschlossenen Schleifen 74, 76, 78 sind Linien konstanter Strahlungsintensität. Die Strahlungsintensität ist jeweils längs einer geschlossenen Schleife 74, 76, 78 konstant und nimmt bei einander benachbarten Schleifen von innen nach außen ab. Die Richtung der Laserstrahlung ist parallel zur Strömungsrichtung des die Partikel transportierenden Fluides, also parallel zur Richtung der Trajektorie 72. Der Spot 22 weist eine Einschnürung auf. D.h., dass jede einzelne Schleife 74, 76, 78 konstanter Intensität eine Taille aufweist. Die konkave Einschnürung wird durch die gestrichelte Linie 79 verdeutlicht. Die physikalischen Einheiten der Abscisse und der Ordinate sind jeweils Längen. Der Spot 22 liegt in der engsten Stelle der Taille.

Für ein an dem Laserspot 22 vorbeifliegendes Partikel hat die Taillenform die Folge, dass der Abstand eines solchen Partikels vom jeweils nächstliegenden Punkt einer solchen geschlossenen Schleife 74, 76, 78 beim Vorbeiflug an dem Laserspot 22 ein lokales Maximum aufweist, das zwischen zwei lokalen Minima liegt. In den lokalen Abstandsminima ist die Strahlungsintensität des Laserspots lokal maximal, und in den lokalen Abstandsmaxima ist die Strahlungsintensität des Laserspots lokal minimal.

Entsprechend weist die Temperatur des von der Laserstrahlung aufgeheizten Partikels bei jedem lokalen Abstandsminimum ein lokales Temperaturmaximum und beim lokalen Abstandsmaximum ein lokales Temperaturminimum auf. Entsprechend der Temperatur des Partikels weist die von dem Partikel ausgehende Temperaturstrahlung bei jedem lokalen Abstandsminimum ein lokales Temperaturstrahlungsmaximum und beim lokalen Abstandsmaximum ein lokales Temperaturstrahlungsminimum auf. Im Ergebnis weist die Temperaturstrahlung eines in einem seitlichen Abstand am Laserspot 22 vorbeifliegenden Partikels einen Doppelpeak auf.

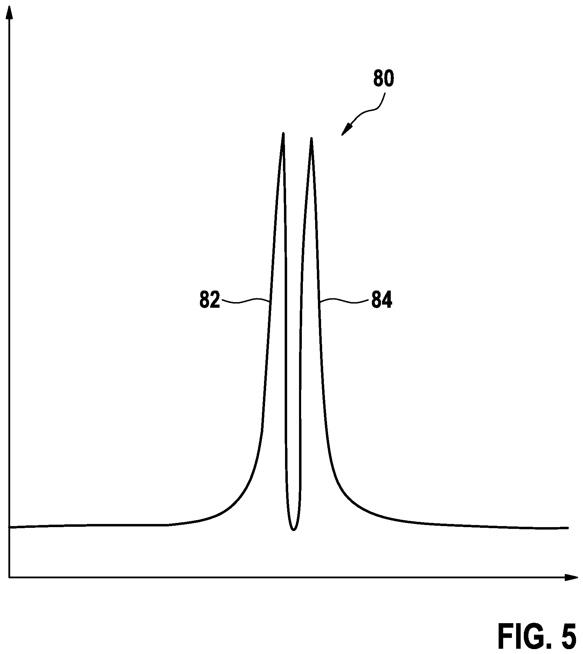

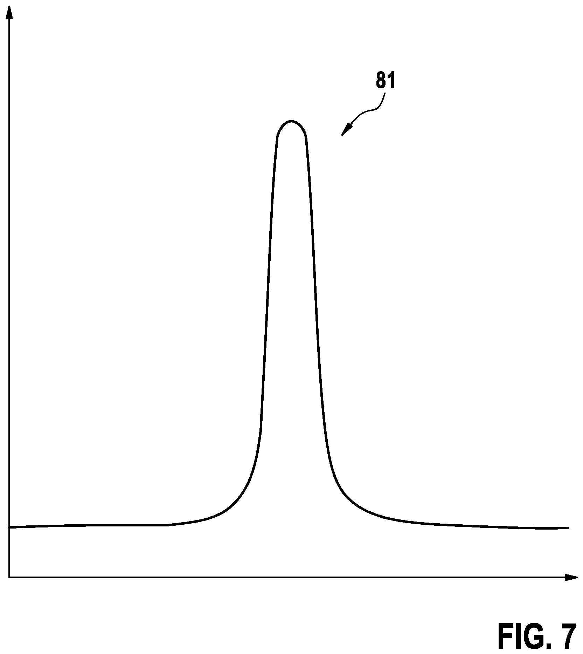

Die Figur 5 zeigt einen solchen Doppelpeak 80 für die Temperaturstrahlung eines seitlich am Laserspot 22 vorbeifliegenden Partikels über der Zeit. Während ein durch das Zentrum des Laserspots 22 hindurchfliegendes Partikel nur einen Intensitätspeak erzeugt, ist die in der Figur 5 ersichtliche Doppelpeak-Struktur für ein seitlich am Laserspot 22 vorbeifliegendes Teilchen (Trajektorie 72) charakteristisch. Es hat sich gezeigt, dass der zeitliche Abstand der Peaks 82, 84 des Doppelpeaks mit größer werdendem seitlichen Abstand eines am Laserspot 22 vorbeifliegenden Partikels zum Laserspot 22 ebenfalls größer wird. Figur 7 zeigt den Einfach-Peak eines LII-Signals für ein durch das Zentrum des Laserspots hindurch fliegendes Partikel über der Zeit.

Die Erkennung der für den seitlichen Vorbeiflug charakteristischen Doppelpeak-Struktur kann mittels verschiedener Signalverarbeitungsverfahren erfolgen, z.B. Mustererkennung mittels künstlicher Intelligenz, Fitten der Kurve an eine bekannte Kurvenform, oder durch einfache Algorithmen zur Findung von Hochpunkten und Vergleich ihrer zeitlichen Positionen.

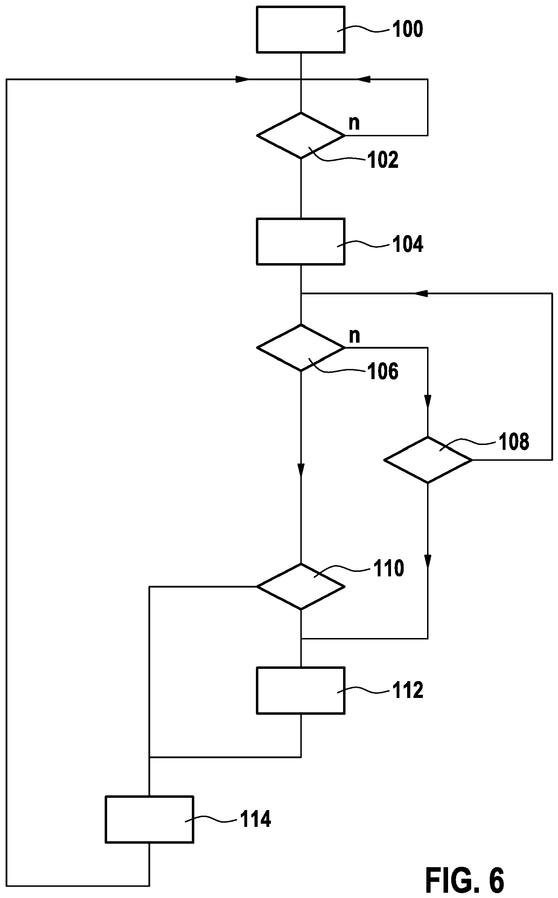

Figur 6 zeigt ein Flussdiagramm als Ausführungsbeispiel eines erfindungsgemäßen Verfahrens zur Unterscheidung von Signalen, die von einem zentrumsnah durch den Laserspot 22 hindurchfliegenden Partikel erzeugt werden, von Signalen, die von seitlich weniger zentrumsnah am Laserspot 22 vorbeifliegenden Partikeln erzeugt werden. Das in der Figur 6 darstellte Flussdiagramm ist darüber hinaus ein Ausführungsbeispiel einer Ausgestaltung des erfindungsgemäßen Verfahrens, mit dem Signale von Partikeln, deren seitlicher Abstand vom Zentrum des Laserspots 22 vergleichsweise klein ist, von Signalen von Partikeln unterschieden werden können, deren seitlicher Abstand vom Zentrum des Laserspots 22 vergleichsweise groß ist. Diese Unterscheidung kann zur Ausfilterung der im vergleichsweise großen Abstand vorbeifliegenden Teilchen verwendet werden. Damit können Messfehler vermieden werden, die auf eine vergleichsweise zu schwache Aufheizung der zuletzt genannten Partikel verursacht werden könnten. Solche Partikel würden aufgrund ihrer im Vergleich zu heißeren Partikeln geringeren Temperaturstrahlung fehlerhaft als Partikel mit kleinerer Masse gewertet, was eine Bestimmung der Partikelmasse verfälschen würde. Das Verfahren wird zum Beispiel von der Steuer- und Auswerteelektronik 62 durchgeführt.

In einem Schritt 100 wird das Verfahren gestartet. In einem Schritt 102 wird überprüft, ob der Detektor einen ersten Strahlungsenergieimpuls, also einen Peak, registriert. Wenn das nicht der Fall ist, wird die durch den Schritt 102 erfolgende Abfrage solange wiederholt, bis ein erster Peak 82 registriert wird. Ein erster Peak wird zum Beispiel dadurch erkannt, dass eine Signalhöhe des Detektorsignals über einem vorbestimmten Schwellenwert liegt.

Eine im Schritt 102 erfolgende Registrierung eines ersten Peaks 82 führt dazu, dass in einem sich dann an den Schritt 102 anschließenden Schritt 104 ein Timer gestartet wird.

An den Schritt 104 schließt sich ein Abfrageschritt 106 an. In diesem Abfrageschritt 106 wird jeweils entschieden, welcher der beiden Abfrageschritte 108 und 110 als nächster Schritt durchgeführt wird. Dazu wird im Schritt 106 überprüft, ob seit dem im Schritt 104 erfolgten Start des Timers ein zweiter Peak 84 registriert wurde. Ein zweiter Peak 84 wird zum Beispiel dadurch erkannt, dass eine Signalhöhe der Detektorsignals über einem vorbestimmten Schwellenwert liegt. Die Schwellenwerte für eine Erkennung eines ersten Peaks 82 und eines zweiten Peaks 84 können gleich sein, oder sie können sich voneinander unterscheiden.

Wenn im Schritt 106 kein zweiter Peak 84 registriert wurde, was einem Verneinen des Abfrageschritts 106 entspricht, verzweigt das Verfahren in den Schritt 108, in dem überprüft wird, ob seit dem Start des Timers eine erste Zeitspanne t1 verstrichen ist. Die erste Zeitspanne t1 entspricht dem maximalen Abstand der Peaks 82, 84 eines Doppelpeaks 80, der durch ein einzelnes Partikel erzeugt worden ist. Wenn seit dem Start des Timers die Zeitspanne t1 noch nicht verstrichen ist, verzweigt das Programm zurück in den Schritt 106. Die Schritte 106 und 108 bilden demnach eine Warteschleife. Ist die seit dem Start des Timers verstrichene Zeit größer als die erste Zeitspanne t1, wird die Warteschleife aus dem Schritt 108 heraus in den Schritt 112 verlassen, in dem der erste Peak ausgewertet wird.

Dieser zum Schritt 112 führende Weg ist charakteristisch für Partikel, die keinen Doppelpeak erzeugen. Damit werden Partikel, die den heißen Spot 22 des Partikelsensors 16 durchqueren und dabei einen einzelnen Peak pro Partikel erzeugen, erfasst und ausgewertet.

Partikel, die seitlich am heißen Spot 22 vorbeifliegen, können dagegen zu Doppelpeaks 80 führen. Je nachdem, wie groß der seitliche Abstand ist, sollen sie entweder als Partikel gezählt werden oder nicht als Partikel gezählt werden. Gezählt werden sollen sie dann, wenn der Abstand der Einzelpeaks 82, 84 eines Doppelpeaks 80 vergleichsweise klein ist, während sie im Fall eines vergleichsweise großen Abstands nicht gezählt werden sollen.

In diesen beiden Fällen wird die Warteschleife, 106. 108, welche die beiden Abfrageschritte 106 und 108 aufweist, aus dem Abfrageschritt 106 heraus zum Abfrageschritt 110 hin verlassen. Dadurch werden diese beiden Fälle von einem Einzelpeak eines durch den Spot 22 hindurchfliegenden Partikels unterschieden: Die durch den Abfrageschritt 106 erfolgende Abfrage, ob ein Peak registriert wurde, wird mit ja beantwortet, bevor die Zeitspanne t1 verstrichen ist.

Im sich dann anschließenden Abfrageschritt 110 wird überprüft, ob die seit dem Start des Timers im Schritt 104 verstrichene Zeitspanne größer als eine vorgegebene Zeitspanne t2 ist, wobei die Länge der Zeitspanne t2 kleiner als die Länge der Zeitspanne t1 ist. Die Länge der vorgegebenen Zeitspanne t2 hängt davon ab, wie groß der der minimale seitliche Abstand der vorbeifliegenden Partikel, die noch gezählt werden sollen, vom Spot 22 ist. Je größer dieser Abstand ist, desto größer muss die vorzugebende Zeitspanne t2 sein.

Wenn die seit dem Start des Timers verstrichene Zeit t kleiner als die Zeitspanne t2 ist, verzweigt das Verfahren in den Schritt 112 in dem eine Auswertung erfolgt. Dies erlaubt eine Unterscheidung von Partikeln, die noch nahe genug am Spot 22 vorbeifliegen, um bis zu ihrer Sättigungstemperatur aufgeheizt zu werden, von solchen Partikeln, die so weit seitlich entfernt am Spot 22 vorbeifliegen, dass sie nicht mehr auf ihre Sättigungstemperatur aufgeheizt werden.

Die Auswertung umfasst dabei zumindest ein Werten des Peaks als Partikel, was beispielsweise durch Erhöhen eines Partikelzählerstandes erfolgen kann, und die Auswertung der Höhe des ersten Peaks 82 eines Doppelpeaks 80. Dabei wird die registrierte Höhe einer Partikelgröße zugeordnet. Die Größe der Partikel hängt so mit der Höhe des Peaks zusammen, dass größere Partikel auch höhere Peaks erzeugen. Bei der Auswertung wird dieser Zusammenhang dadurch berücksichtigt, dass höhere Peaks entsprechende größere Werte der Partikelgröße zugeordnet werden.

Im Anschluss an den Schritt 112 wird der Timer im Schritt 114 wieder auf seinen Startwert, beispielsweise Null, gesetzt. Daran schließt sich erneut der Schritt 102 an, in dem auf das Registrieren eines Peaks gewartet wird.

Wenn die seit dem Start des Timers verstrichene Zeit t nicht kleiner als die Zeitspanne t2 ist, verzweigt das Verfahren aus dem Schritt 110 direkt in den Schritt 114, so dass das zugehörige Partikel nicht ausgewertet wird. Dadurch werden Signale von Partikeln, deren seitlicher Vorbeiflug in einem für eine Auswertung zu großen Abstand am Spot erfolgt, ausgefiltert (nicht ausgewertet).

Die Zeitspanne t2 wird gerade so vorgegeben, dass Partikel, die solche Doppelpeaks erzeugen, nicht ausgewertet werden. Mit dem Schritt 110 wird das dadurch erreicht, dass das Verfahren dann, wenn die mit dem Timer gemessene Zeitspanne t die Dauer der Zeitspanne t2 überschreitet, nicht zur Auswertung im Schritt 112 verzweigt. Stattdessen wird im dargestellten Ausführungsbeispiel in den Schritt 114 verzweigt, in den der Timer wieder auf seinen Startwert gesetzt wird. Auch in diesem Fall kehrt das Programm anschließend in den Schritt 102 zurück, so dass weitere Partikel gezählt und ausgewertet werden können.

## Patentansprüche

1. Verfahren zum Betreiben eines Partikelsensors (16), der ein einen Laser aufweisendes Lasermodul (18) und ein zur Detektion von Temperaturstrahlung (14) eingerichteten Detektor (26), ein im Strahlengang des Lasers des Lasermoduls (18) angeordnetes optisches Element (20) und einen Detektor (26) aufweist, wobei das optische Element dazu eingerichtet ist, von dem Lasermodul (18) ausgehendes Laserlicht (10) in einen Spot (22) zu bündeln, um an der Stelle des Spots einen Partikel zum Leuchten anzuregen, und wobei der Detektor (26) im Partikelsensor (16) so angeordnet ist, dass er vom Spot (22) ausgehende Strahlung (14) detektiert, wobei die Ausgangssignale des Detektors einer Filterung unterzogen werden, mit der von nicht ausreichend aufgeheizten Partikeln erzeugte Ausgangssignale von einer weiteren Auswertung ausgeschlossen werden, **gekennzeichnet dadurch dass** die Filterung so erfolgt, dass Peaks, die eine charakteristische Doppelpeak-Struktur aufweisen, von der weiteren Auswertung ausgeschlossen werden, wobei eine Erkennung der charakteristischen Doppelpeak-Struktur mittels eines Signalverarbeitungsverfahrens erfolgt, wobei das Signalverarbeitungsverfahren mit einer Mustererkennung mittels künstlicher Intelligenz oder einem Fitten einer Kurve der Doppelpeak-Struktur an eine Muster-Kurvenform oder durch Algorithmen zur Findung von Hochpunkten der Doppelpeak-Struktur und zur Auswertung eines zeitlichen Abstandes der Hochpunkte erfolgt, wobei die Filterung auf einer Auswertung des zeitlichen Abstandes von Peaks im Ausgangssignal des Detektors basiert, wobei ein erster Peak im Ausgangssignal des Detektors erfasst wird und eine Entscheidung darüber, ob der erfasste erste Peak als ein ein Partikel anzeigendes Ereignis gezählt wird, davon abhängig ist, ob innerhalb einer vorgegebenen ersten Zeitdauer t1, die mit dem Erfassen des ersten Peaks beginnt, ein weiterer Peak im Ausgangssignal des Detektors erfasst wird.

2. Verfahren nach Anspruch 1, **dadurch gekennzeichnet, dass** die erste Zeitdauer t1 in Abhängigkeit von einer Geschwindigkeit des Fluids oder des Gases vorgegeben wird, das die Partikel transportiert.

3. Verfahren nach Anspruch 1 oder 2, **dadurch gekennzeichnet, dass** eine Zeitspanne erfasst wird, die seit dem Erfassen des ersten Peaks verstrichen ist, dass der erste Peak als ein Partikel gezählt wird, wenn innerhalb der vorgegebenen ersten Zeitdauer kein weiterer Peak im Ausgangssignal des Detektors erfasst wird.

4. Verfahren nach Anspruch 3, **dadurch gekennzeichnet, dass** dann, wenn ein zweiter Peak innerhalb der ersten Zeitdauer t1 erfasst worden ist, überprüft wird, ob der zweite Peak innerhalb einer zweiten Zeitdauer t2 erfasst worden ist, die kürzer als die erste Zeitdauer t1 ist und dass dann, wenn der zweite Peak innerhalb der zweiten Zeitdauer erfasst worden ist, der erste Peak und der zweite Peak eines Doppel-Peaks zusammen als ein Partikel gezählt werden.

5. Verfahren nach einem der vorhergehenden Ansprüche, **dadurch gekennzeichnet, dass** die Höhe eines Peaks als Maß für die Größe des Partikels gewertet wird.

6. Verfahren nach Anspruch 5, **dadurch gekennzeichnet, dass** eine Höhe des ersten Peaks des Doppelpeaks als Maß für die Größe gewertet wird.

7. Verfahren nach einem der vorhergehenden Ansprüche, **dadurch gekennzeichnet, dass** vom Spot (22) ausgehende Strahlung (14) einer Wellenlängenfilterung unterzogen wird, bei der im Wellenlängenbereich der Laserstrahlung liegende Wellenlängen ausgeschlossen werden.

8. Steuergerät zum Betreiben eines Partikelsensors (16), der ein einen Laser aufweisendes Lasermodul (18) und ein zur Detektion von Temperaturstrahlung (14) eingerichteten Detektor (26), ein im Strahlengang des Lasers des Lasermoduls (18) angeordnetes optisches Element (20) und einen Detektor (26) aufweist, wobei das optische Element dazu eingerichtet ist, von dem Lasermodul (18) ausgehendes Laserlicht (10) in einen Spot (22) zu bündeln, und wobei der Detektor (26) im Partikelsensor (16) so angeordnet ist, dass er vom Spot (22) ausgehende Strahlung (14) detektiert, wobei das Steuergerät dazu eingerichtet ist, einen ersten Peak im Ausgangssignal des Detektors zu erfassen, **dadurch gekennzeichnet, dass** das Steuergerät dazu eingerichtet ist, ein Verfahren nach einem der Ansprüche 1 bis 7 auszuführen.

## Claims

1. Method for operating a particle sensor (16) comprising a laser module (18), which comprises a laser, and a detector (26) configured for detecting thermal radiation (14), an optical element (20) arranged in the beam path of the laser of the laser module (18), and a detector (26), wherein the optical element is configured to focus laser light (10) emanating from the laser module (18) to a spot (22) in order to excite a particle to emit light at the location of the spot, and wherein the detector (26) is arranged in the particle sensor (16) in such a way that it detects radiation (14) emanating from the spot (22), wherein the output signals of the detector are subjected to filtering, by which output signals generated by insufficiently heated particles are excluded from a further evaluation, **characterized in that** the filtering is effected in such a way that peaks having a characteristic double peak structure are excluded from the further evaluation, wherein the characteristic double peak structure is recognized by means of a signal processing method, wherein the signal processing method is effected using pattern recognition by means of artificial intelligence, or fitting of a curve of the double peak structure to a sample curve shape, or by algorithms for finding high points of the double peak structure and for evaluating a temporal spacing of the high points, wherein the filtering is based on an evaluation of the temporal spacing of peaks in the output signal of the detector, wherein a first peak is detected in the output signal of the detector, and a decision as to whether the detected first peak is counted as an event indicating a particle is dependent on whether a further peak is detected in the output signal of the detector within a predefined first time duration t1, which begins with the detection of the first peak.

2. Method according to Claim 1, **characterized in that** the first time duration t1 is predefined as a function of a speed of the fluid or gas that transports the particles.

3. Method according to Claim 1 or 2, **characterized in that** a time period that has elapsed since the detection of the first peak is detected, **in that** the first peak is counted as a particle if no further peak is detected in the output signal of the detector within the predefined first time duration.

4. Method according to Claim 3, **characterized in that** if a second peak has been detected within the first time duration t1, a check is made to ascertain whether the second peak has been detected within a second time duration t2, which is shorter than the first time duration t1, and **in that** if the second peak has been detected within the second time duration, the first peak and the second peak of a double peak together are counted as a particle.

5. Method according to any of the preceding claims, **characterized in that** the height of a peak is assessed as a measure of the size of the particle.

6. Method according to Claim 5, **characterized in that** a height of the first peak of the double peak is assessed as a measure of the size.

7. Method according to any of the preceding claims, **characterized in that** radiation (14) emanating from the spot (22) is subjected to wavelength filtering that excludes wavelengths in the wavelength range of the laser radiation.

8. Control unit for operating a particle sensor (16) comprising a laser module (18), which comprises a laser, and a detector (26) configured for detecting thermal radiation (14), an optical element (20) arranged in the beam path of the laser of the laser module (18), and a detector (26), wherein the optical element is configured to focus laser light (10) emanating from the laser module (18) to a spot (22), and wherein the detector (26) is arranged in the particle sensor (16) in such a way that it detects radiation (14) emanating from the spot (22), wherein the control unit is configured to detect a first peak in the output signal of the detector, **characterized in that** the control unit is configured to carry out a method according to any of Claims 1 to 7.

## Revendications

1. Procédé pour faire fonctionner un capteur de particules (16), lequel possède un module à laser (18) possédant un laser et un détecteur (26) conçu pour la détection d'un rayonnement thermique (14), un élément optique (20) disposé dans le trajet de rayon du laser du module à laser (18) et un détecteur (26), l'élément optique étant conçu pour concentrer la lumière laser (10) émanant du module à laser (18) en un spot (22) et, à l'endroit du spot, exciter une particule pour la faire briller, et le détecteur (26) étant disposé dans le capteur de particules (16) de telle sorte qu'il détecte le rayonnement (14) émanant du spot (22), les signaux de sortie du détecteur étant soumis à un filtrage avec lequel les signaux de sortie générés par des particules non suffisamment chauffées sont exclus d'une interprétation ultérieure, **caractérisé en ce que** le filtrage est effectué de telle sorte que les crêtes qui présentent une structure de double crête caractéristique soient exclues de l'interprétation ultérieure, une reconnaissance de la structure de double crête caractéristique s'effectuant au moyen d'un procédé de traitement de signal, le procédé de traitement de signal étant mis en œuvre avec une reconnaissance de modèle au moyen de l'intelligence artificielle ou un ajustement d'une courbe de la structure de double crête à un modèle de forme de courbe ou par des algorithmes destinés à rechercher les points hauts de la structure de double crête et à interpréter un écart dans le temps entre les points hauts, le filtrage se basant sur une interprétation de l'écart dans le temps des crêtes dans le signal de sortie du détecteur, une première crête dans le signal de sortie du détecteur étant acquise et une décision selon laquelle la première crête acquise est comptée comme un événement indiquant une particule dépendant du fait qu'à l'intérieur d'une première durée t1, laquelle commence avec l'acquisition de la première crête, une crête supplémentaire est acquise dans le signal de sortie du détecteur.

2. Procédé selon la revendication 1, **caractérisé en ce que** la première durée t1 est prédéfinie en fonction d'une vitesse du fluide ou du gaz qui transporte les particules.

3. Procédé selon la revendication 1 ou 2, **caractérisé en ce qu'**une période est acquise, laquelle s'est écoulée depuis l'acquisition de la première crête, **en ce que** la première crête est comptée comme une particule si aucune autre crête n'est acquise dans le signal du détecteur à l'intérieur de la première durée prédéfinie.

4. Procédé selon la revendication 3, **caractérisé en ce que** lorsqu'une deuxième crête a été acquise à l'intérieur de la première durée t1, un contrôle est effectué pour vérifier si la deuxième crête a été acquise à l'intérieur d'une première durée t2, laquelle est plus courte que la première durée t1, et **en ce que** lorsque la deuxième crête a été acquise à l'intérieur de la deuxième durée, la première crête et la deuxième crête d'une double crête sont comptées ensemble comme une particule.

5. Procédé selon l'une des revendications précédentes, **caractérisé en ce que** la hauteur d'une crête est évaluée comme une mesure de la taille de la particule.

6. Procédé selon la revendication 5, **caractérisé en ce qu'**une hauteur de la première crête de la double crête est évaluée comme mesure de la grandeur.

7. Procédé selon l'une des revendications précédentes, **caractérisé en ce que** le rayonnement (14) émanant du spot (22) est soumis à un filtrage de longueur d'onde avec lequel les longueurs d'onde qui se trouvent dans la plage de longueurs d'onde du rayonnement laser sont exclues.

8. Contrôleur pour faire fonctionner un capteur de particules (16), lequel possède un module à laser (18) possédant un laser et un détecteur (26) conçu pour la détection d'un rayonnement thermique (14), un élément optique (20) disposé dans le trajet de rayon du laser du module à laser (18) et un détecteur (26), l'élément optique étant conçu pour concentrer la lumière laser (10) émanant du module à laser (18) en un spot (22) et le détecteur (26) étant disposé dans le capteur de particules (16) de telle sorte qu'il détecte le rayonnement (14) émanant du spot (22), le contrôleur étant conçu pour acquérir une première crête dans le signal de sortie du détecteur, **caractérisé en ce que** le contrôleur est conçu pour mettre en œuvre un procédé selon l'une des revendications 1 à 7.
